(19) Europäisches Patentamt
European Patent Office
Office européen des brevets

(11) **EP 3 161 513 B1**

(12) **EUROPÄISCHE PATENTSCHRIFT**

(45) Veröffentlichungstag und Bekanntmachung des Hinweises auf die Patenterteilung:
**28.10.2020  Patentblatt 2020/44**

(21) Anmeldenummer: **15717897.1**

(22) Anmeldetag: **23.04.2015**

(51) Int Cl.:
*G01S 13/34* (2006.01)　　　*G01S 13/42* (2006.01)
*G01S 7/35* (2006.01)　　　*G01S 13/58* (2006.01)
*G01S 13/02* (2006.01)　　　*G01S 13/32* (2006.01)
*G01S 13/536* (2006.01)　　　*G01S 13/931* (2020.01)

(86) Internationale Anmeldenummer:
**PCT/EP2015/058753**

(87) Internationale Veröffentlichungsnummer:
**WO 2015/197223 (30.12.2015 Gazette 2015/52)**

(54) **RADARMESSVERFAHREN MIT UNTERSCHIEDLICHEN SICHTBEREICHEN**

RADAR MEASUREMENT METHOD WITH DIFFERENT VIEWING RANGES

PROCÉDÉ DE MÉSURE DE RADAR AVEC DES ZONES DE VISION DIFFÉRENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014  DE 102014212281**

(43) Veröffentlichungstag der Anmeldung:
**03.05.2017  Patentblatt 2017/18**

(73) Patentinhaber: **Robert Bosch GmbH**
**70442 Stuttgart (DE)**

(72) Erfinder:
• SCHOOR, Michael
70195 Stuttgart (DE)
• LOESCH, Benedikt
70195 Stuttgart (DE)

(56) Entgegenhaltungen:
EP-A1- 0 730 166　　　EP-A1- 2 060 929
WO-A2-2010/115418　　　DE-A1-102012 008 350
JP-A- 2009 288 223　　　US-A- 5 652 589
US-A1- 2011 122 013　　　US-A1- 2012 235 857

EP 3 161 513 B1

**Beschreibung**

STAND DER TECHNIK

Die Erfindung betrifft ein Verfahren zum Orten eines Radarziels, bei dem FMCW-Radarmessungen mit Sende-Antennen mit unterschiedlichen Sichtbereichen, die sich in einem Öffnungswinkel und/oder in einer Reichweite unterscheiden, ausgeführt werden, wobei empfangene Signale zu Basisbandsignalen heruntergemischt werden.

Insbesondere betrifft die Erfindung ein Verfahren dieser Art, bei dem für wenigstens zwei der Sichtbereiche die jeweilige Messung eine winkelauflösende Messung ist, die mit unterschiedlichen Auswahlen von mehreren zum Senden und/oder zum Empfangen verwendeten Antennen ausgeführt wird, wobei zum Orten von Radarzielen eine Suche nach Peaks in zweidimensionalen Spektren der Basisbandsignale der Messungen der jeweiligen Sichtbereiche durchgeführt wird, und wobei eine Winkelposition eines in einem jeweiligen Sichtbereich georteten Radarziels anhand von Amplituden und/oder Phasen an der Position eines dem Radarziel entsprechenden Peaks in zweidimensionalen Spektren der Basisbandsignale bestimmt wird, die für die unterschiedlichen Auswahlen der zum Senden und/oder zum Empfangen verwendeten Antennen erhalten werden.

Weiter betrifft die Erfindung einen Radarsensor, insbesondere für Kraftfahrzeuge, der zur Durchführung dieses Verfahrens ausgebildet ist.

Bei Kraftfahrzeugen werden FMCM-Radarsensoren zur Erfassung des Verkehrsumfelds eingesetzt, insbesondere zur Ortung anderer Fahrzeuge. Die Ortungsergebnisse können für verschiedene Assistenzfunktionen genutzt werden, beispielsweise für eine automatische Abstandsregelung, eine automatische Kollisionswarnung oder auch die automatische Auslösung eines Notbremsvorgangs bei akuter Kollisionsgefahr.

Bei FMCW-(Frequency Modulated Continuous Wave)-Radarsensoren wird ein Sendesignal mit rampenförmig modulierter Frequenz verwendet. Das Signal wird während des Verlaufs der Rampe kontinuierlich gesendet. Aus einem Empfangssignal wird durch Mischen mit dem Sendesignal ein Basisbandsignal erzeugt, welches abgetastet und ausgewertet wird.

Die Frequenz des Basisbandsignals entspricht dem Frequenzunterschied zwischen dem zu einem gegebenen Zeitpunkt gesendeten Signal und dem zum selben Zeitpunkt empfangenen Signal. Aufgrund der Frequenzmodulation des Sendesignals ist dieser Frequenzunterschied von der Laufzeit des Signals vom Radarsensor zum Objekt und zurück und somit vom Abstand des Objekts abhängig. Aufgrund des Doppler-Effektes enthält der Frequenzunterschied jedoch auch einen Anteil, der durch die Relativgeschwindigkeit des Objektes bedingt ist. Die Messung des Frequenzunterschieds auf einer einzelnen Rampe erlaubt deshalb noch keine Bestimmung des Abstands und der Relativgeschwindigkeit, sondern liefert nur eine lineare Beziehung zwischen diesen Größen. Diese Beziehung lässt sich in einem Abstands-Geschwindigkeits-Diagramm (d-v-Diagramm) als Gerade darstellen.

Es sind FMCW-Radarsensoren bekannt, bei denen mit einer Sequenz von identischen, verhältnismäßig kurzen Rampen, sogenannten "Rapid Chirps" gearbeitet wird, die im Verhältnis zu ihrer Dauer einen hohen Frequenzhub haben und deshalb so steil sind, dass im Basisbandsignal der abstandsabhängige Anteil der Frequenzverschiebung dominiert, während die Dopplerverschiebung durch die Sequenz der Rampen abgetastet wird. Um innerhalb eines Messbereichs der Relativgeschwindigkeit eine eindeutige Bestimmung der Relativgeschwindigkeit zu gestatten, ist daher eine ausreichend hohe Wiederholrate der kurzen Rampen erforderlich. Insbesondere muss der Zeitversatz zwischen aufeinander folgenden kurzen Rampen kleiner sein als die halbe Periodendauer der Dopplerfrequenz.

Zumeist weist der Radarsensor mehrere Antennen auf, die in Abstand zueinander auf einer Linie, beispielsweise einer Horizontalen angeordnet sind, so dass unterschiedliche Azimutwinkel der georteten Objekte zu Differenzen in den Lauflängen führen, die die Radarsignale vom Objekt bis zur jeweiligen Antenne zurückzulegen haben. Diese Lauflängendifferenzen führen zu entsprechenden Unterschieden in der Phase der Signale, die von den Antennen empfangen und in den zugehörigen Auswertungskanälen ausgewertet werden. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des georteten Objekts bestimmen.

Bei einem MIMO-Radar (Multiple Input/ Multiple Output) wird ein größeres Winkelauflösungsvermögen dadurch erreicht, dass man nicht nur mit mehreren empfangenden Antennen arbeitet, sondern auch mit mehreren sendenden Antennen, wobei unterschiedliche Kombinationen von sendenden und empfangenden Antennen ausgewertet werden, die zu jeweiligen Lauflängendifferenzen eines reflektierten Signals führen.

Bei einem MIMO-Radar müssen die mit verschiedenen Auswahlen der sendenden Antennen gesendeten Signale zueinander orthogonal oder zeitlich trennbar sein. Das lässt sich beispielsweise durch Codemultiplex, Frequenzmultiplex oder Zeitmultiplex erreichen. Das Codemultiplex-Verfahren erfordert jedoch einen hohen Aufwand und ermöglicht nur eine begrenzte Orthogonalität der Signale. Bei Frequenzmultiplex-Verfahren besteht der Nachteil, dass die Phase und die Doppler-Verschiebung von der jeweiligen Wellenlänge abhängig sind. Bei dem Zeitmultiplex-Prinzip besteht das Problem, dass Relativbewegungen der georteten Objekte in Verbindung mit dem Zeitunterschied zwischen den Messungen mit verschiedenen Schaltzuständen zu Phasenunterschieden führen, die die nachfolgende Winkelschätzung erschweren.

US 2011/0122013 A1 beschreibt ein FMCW-Radarsystem für Kraftfahrzeuge mit einer FFT-Einheit, einer digitalen Strahlformungseinheit, einem Prozessor, der Entfernungen und Geschwindigkeiten von Zielen berechnet, und einer Winkelmesseinheit. In einem Beispiel wird ein rampenförmig frequenzmoduliertes Signal gesendet, bei dem Frequenzrampen mit höherer Wiederholfrequenz für Ziele mit geringerer Geschwindigkeit nacheinander gesendet werden und dies innerhalb eines Zyklus wiederholt wird.

EP 0730166 A1 beschreibt ein Verfahren zur Verkehrserfassung mit einem Radargerät, das nach dem FM-CW-Prinzip arbeitet und sowohl eine Geschwindigkeitsmessung als auch eine Entfernungsselektion gestattet. Es werden mit einer reduzierten Abtastfrequenz zwei Geschwindigkeitsmessungen kurz nacheinander durchgeführt, wobei von beiden Abtastwertpaketen in einem jeweiligen Datenverarbeitungssystem eine Fourieranalyse durchgeführt wird, wobei die Phasenwinkeldifferenz der beiden Abtastpakete einen groben, im interessierenden Geschwindigkeitsbereich eindeutigen Meßwert liefert, welcher mit den vieldeutigen Meßwerten eines einzelnen Abtastpaketes verknüpft wird, um den genauen eindeutigen Geschwindigkeitswert zu bestimmen.

US 5 652 589 A beschreibt eine FM-CW-Mehrstrahl-Radarvorrichtung mit teilweise überlappenden Strahlkeulen. Bei Erfassung eines nahen Ziels wird das Maß der Frequenzänderung pro Zeit eines frequenzmodulierten Sendesignals erhöht, um eine erhaltene Differenzfrequenz zu erhöhen. In einem Beispiel werden abwechselnd Signale zum Detektieren von nahen Zielen und Signale zum Detektieren von fernen Zielen gesendet, jeweils mit einer dreiecksförmigen Frequenzmodulation, und das Muster wird nacheinander für jeden Sendekanal zum Senden verwendet. Das jeweils erhaltene Empfangssignal wird nach Heruntermischen einer digitalen FFT unterzogen.

WO 2010/115418 A2 beschreibt ein Radarsystem zum Einsatz für Fahrerassistenzsysteme im Kraftfahrzeug. Über die Abtastwerte jeder Frequenzrampe und jedes Empfangskanals wird eine diskrete Fouriertransformation (DFT) gebildet. Nach einer zweiten DFT für die Relativgeschwindigkeiten wird eine dritte DFT für die Azimutwinkel berechnet. Es ergibt sich ein dreidimensionales komplexwertiges Spektrum, wobei die einzelnen Zellen als Entfernung-Relativgeschwindigkeit-Winkel-Tore bezeichnet werden und durch Objekte Leistungsspitzen am jeweils zugehörigen Entfernung-Relativgeschwindigkeit-Winkel-Tor auftreten.

DE 102012008350 A1 betrifft ein Verfahren zur Abstimmung von Abstand und Radialgeschwindigkeit eines Objekts mittels Radarsignalen, bei dem Range-Doppler-Matrizen für zwei Gruppen von Rampen bestimmt werden. Zum Zwecke der Detektion werden die Signale pro Zelle inkohärent betragsmäßig addiert.

JP 2009/288223 A betrifft ein Radarverfahren mit einer Sendefrequenz, der vier Arten von Frequenzmodulationen überlagert werden.

US 2012/0235857 A1 betrifft eine Radarvorrichtung, bei der eine Mehrzahl von Nahbereichs-Sende-Chirp-Signalen und eine Mehrzahl von Fernbereichs-Sende-Chirp-Signalen nach einem vorbestimmten Modulationsschema erzeugt werden.

EP 2060929 A1 betrifft ein Radarverfahren mit einem Sägezahn-moduliertem Sendesignal. Im einem Beispiel umfasst ein einzelner Sendezyklus zwei Modulationsabschnitte. Das Intervall zwischen den zwei Modulationsabschnitten in dem einzelnen Sendezyklus verändert sich von einem Sendezyklus zum nächsten.

## OFFENBARUNG DER ERFINDUNG

Aufgabe der Erfindung ist es, ein Verfahren der eingangs genannten Art anzugeben, das eine bessere Ausnutzung einer zur Verfügung stehenden Zykluszeit zur Abtastung der unterschiedlichen Sichtbereiche gestattet.

Wenn Objekte in unterschiedlichen, sich aber überlappenden Sichtbereichen geortet werden sollen, beispielsweise in einem Sichtbereich, der einen relativ großen Öffnungswinkel bei begrenzter Reichweite aufweist, und in einem Sichtbereich, der eine relativ große Reichweite bei begrenztem Öffnungswinkel aufweist, erfordert dies herkömmlich eine lange Zykluszeit eines Messzyklus, um alle Sichtbereiche nacheinander abzutasten.

Die Aufgabe wird erfindungsgemäß gelöst durch ein Verfahren der eingangs genannten Art, bei dem:

(a) in einem Messzyklus für die unterschiedlichen Sichtbereiche jeweils eine Messung ausgeführt wird, bei der ein rampenförmig frequenzmoduliertes Sendesignal gesendet wird, dessen Modulationsmuster mehrere zeitlich verschachtelte Sequenzen von Rampen umfasst, die innerhalb der jeweiligen Sequenz mit einem Zeitintervall zeitversetzt aufeinander folgen,

wobei die Sequenzen der Messungen mit unterschiedlichen Sichtbereichen zeitlich miteinander verwoben sind, so dass in Lücken zwischen den Rampen einer Sequenz Rampen der jeweils anderen Sequenzen angeordnet sind und wobei in einem regelmäßigen Muster zwischen den Sichtbereichen gewechselt wird,

wobei für wenigstens einen der Sichtbereiche die Messung ein Modulationsmuster aufweist, das wenigstens zwei verschiedene, regelmäßig wiederkehrende Zeitversätze zwischen Rampen unterschiedlicher Sequenzen mit gleichem, die Rampen in der jeweiligen Sequenz zählenden Rampenindex innerhalb der jeweiligen Sequenz aufweist, wobei diese Zeitversätze sich von dem Zeitintervall unterscheiden, mit dem die Rampen innerhalb einer jeweiligen Sequenz aufeinander folgen,

(b) aus den Basisbandsignalen gesondert für jede der Sequenzen durch zweidimensionale Fourier-Transformation ein zweidimensionales Spektrum berechnet wird, wobei in der ersten Dimension Rampe für Rampe transformiert wird und in der zweiten Dimension über den Rampenindex transformiert wird,

(c) für den wenigstens einen der Sichtbereiche anhand einer Position eines Peaks in wenigstens einem zweidimensionalen Spektrum der Basisbandsignale des jeweiligen Sichtbereichs Werte für die Relativgeschwindigkeit eines in dem jeweiligen Sichtbereich erfassten Radarziels bestimmt werden, die mit einer vorbestimmten Geschwindigkeitsperiode periodisch sind,

(d) für den wenigstens einen der Sichtbereiche wenigstens eine Phasenbeziehung zwischen Spektralwerten, die an jeweils der gleichen Position in den gesondert berechneten zweidimensionalen Spektren des Sichtbereichs erhalten werden, auf Übereinstimmung mit erwarteten Phasenbeziehungen für mehrere der bestimmten periodischen Werte der Relativgeschwindigkeit des erfassten Radarziels überprüft wird, und

(e) für den wenigstens einen der Sichtbereiche aus den bestimmten, periodischen Werten der Relativgeschwindigkeit anhand des Ergebnisses der Überprüfung ein Schätzwert für die Relativgeschwindigkeit des in dem jeweiligen Sichtbereich erfassten Radarziels ausgewählt wird.

Die Sequenzen sind zeitlich ineinander verschachtelt. Das heisst, in Lücken zwischen den Rampen einer Sequenz sind Rampen der jeweiligen anderen Sequenzen angeordnet. Der Begriff "ineinander verschachtelt" wird hier synonym zu den Begriffen "miteinander verzahnt" oder "miteinander verwoben" verwendet.

Vorzugsweise wird in Schritt (c) anhand einer Position des Peaks in der ersten Dimension des wenigstens einen zweidimensionalen Spektrums ein linearer Zusammenhang zwischen dem Abstand und der Relativgeschwindigkeit des Radarziels bestimmt, und anhand einer Position des Peaks in der zweiten Dimension des wenigstens einen zweidimensionalen Spektrums werden zumindest die Werte für die Relativgeschwindigkeit des Radarziels bestimmt, die mit der vorbestimmten Geschwindigkeitsperiode periodisch sind.

Über die Sequenz der Rampen erfolgt eine Unterabtastung der Dopplerverschiebungsfrequenz, so dass die erhaltene Information über die Relativgeschwindigkeit mit einer Mehrdeutigkeit behaftet ist. Insbesondere ist der Wert der Relativgeschwindigkeit periodisch mit einem Geschwindigkeitsintervall

$$\Delta v = \frac{c}{2 f_0 T_{r2r}} \qquad\qquad (1)$$

 wobei c die Lichtgeschwindigkeit ist, $f_0$ die mittlere Sendefrequenz ist und Tr2r das Zeitintervall zwischen den Rampen innerhalb einer Sequenz ist. Aus einer Position eines dem Radarziel zugeordneten Peaks in einem zweidimensionalen Spektrum der abgetasteten Basisbandsignale wird somit ein mit einer Mehrdeutigkeit behafteter Wert der Relativgeschwindigkeit des Radarziels bestimmt. Die Mehrdeutigkeit kann dann aufgelöst werden, indem untersucht wird, wie gut die für die jeweiligen Werte der Relativgeschwindigkeit erwarteten Phasenbeziehungen zwischen den Signalen der Sequenzen übereinstimmen mit der gemessenen Phasenbeziehung. Die erwartete Phasenbeziehung hängt jeweils von der Relativgeschwindigkeit und dem Zeitversatz zwischen den betreffenden Sequenzen ab.

Aufgrund der wenigstens zwei Zeitversätze zwischen den Sequenzen, die sich jeweils von dem für alle Sequenzen aller Sichtbereiche gleichen Zeitintervall Tr2r unterscheiden, kann eine eindeutige Schätzung der Relativgeschwindigkeit innerhalb eines Geschwindigkeitsmessbereichs ermöglicht werden, der wenigstens ein Mehrfaches des Eindeutigkeitsbereichs einer Messung mit nur einer der Sequenzen der Rampen ist. Dadurch werden relativ große Zeitintervalle zwischen den Rampen, d.h. zwischen den Rampenmittelpunkten, einer Sequenz ermöglicht, so dass die Messungen für die unterschiedlichen Sichtbereiche zeitlich miteinander verwoben werden können und bei gleichem Hardwareaufwand eine genauere Ortung ermöglicht wird.

Innerhalb einer Periode des Modulationsmusters, deren Länge dem Zeitintervall Tr2r entspricht, sind die Rampen vorzugsweise in ungleichmäßigen Abständen angeordnet, so dass das Modulationsmuster trotz des regelmäßigen Zeitintervalls Tr2r möglichst wenig Symmetrie aufweist. Aufgrund des einheitlichen Zeitintervalls Tr2r wiederholen sich die Zeitversätze zwischen den Rampen unterschiedlicher Sequenzen von Periode zu Periode.

Vorzugsweise wird in dem Schritt (e) des Auswählens eines Schätzwertes für die Relativgeschwindigkeit der Schätzwert in einem Messbereich für die Relativgeschwindigkeit eindeutig bestimmt, wobei ein oberer Maximalwert $v_{max}$ des Messbereichs in folgender Beziehung zu dem Zeitabstand Tr2r der Rampenmittelpunkte innerhalb einer Sequenz steht:

$$Tr2r > c/(4f_0 v_{max})$$

wobei c die Lichtgeschwindigkeit ist und $f_0$ die mittlere Sendefrequenz. Dies entspricht einer Unterabtastung einer maximal zu detektierenden Relativgeschwindigkeit $v_{max}$ eines Radarziels durch die mit dem Zeitabstand Tr2r aufeinanderfolgenden Rampen einer Sequenz. Vorzugsweise beträgt Tr2r wenigstens ein Mehrfaches der genannten Größe auf der rechten Seite der Beziehung.

Vorzugsweise wird in dem Schritt (e) des Auswählens eines Schätzwertes für die Relativgeschwindigkeit der Schätzwert in einem Messbereich für die Relativgeschwindigkeit eindeutig bestimmt, wobei ein oberer Maximalwert $v_{max}$ des Messbereichs in folgender Beziehung zu einem jeweiligen Zeitversatz Tli zwischen Rampen unterschiedlicher Sequenzen steht:

$$T1i > c/(4f_0 v_{max})$$

Vorzugsweise beträgt Tli wenigstens ein Mehrfaches der genannten Größe auf der rechten Seite der Beziehung.

Vorzugsweise weisen die Messungen mit unterschiedlichen Sichtbereichen jeweils ein Modulationsmuster auf, das wenigstens zwei verschiedene, regelmäßig wiederkehrende Zeitversätze zwischen Rampen unterschiedlicher Sequenzen aufweist.

Vorteilhafte Ausgestaltungen der Erfindung sind in den Unteransprüchen angegeben.

Die unterschiedlichen Zeitversätze zwischen Sequenzen eines Sichtbereichs können auf verschiedene Weise vorgesehen werden:

Beispielsweise kann für wenigstens einen der Sichtbereiche die Messung ein Modulationsmuster aufweisen, das wenigstens drei der Sequenzen umfasst, für die dieselbe Antenne zum Senden verwendet wird, wobei diese Sequenzen untereinander in Bezug auf eine erste der Sequenzen unterschiedliche, einer jeweiligen weiteren der Sequenzen zugeordnete Zeitversätze aufweisen. Dies ist nützlich, wenn für einen Sichtbereich nur eine Sendeantenne zur Verfügung steht.

Beispielsweise kann für wenigstens einen der Sichtbereiche die Messung mit mehreren zum Senden verwendeten Antennen ausgeführt werden, wobei wenigstens zwei unterschiedliche Sende-Schaltzustände, die sich in der Auswahl der zum Senden verwendeten Antennen unterscheiden, verwendet werden,

wobei diesen Sende-Schaltzuständen jeweils wenigstens zwei der Sequenzen zugeordnet sind, die zeitlich ineinander verschachtelt sind und untereinander in Bezug auf eine erste der Sequenzen einen einer jeweiligen weiteren der Sequenzen zugeordneten Zeitversatz aufweisen,

wobei bei diesen unterschiedlichen Sende-Schaltzuständen den weiteren Sequenzen unterschiedliche Zeitversätze zugeordnet sind, und

wobei zwischen aufeinander folgenden Rampen der Messung, die unterschiedlichen Sende-Schaltzuständen zugeordnet sind, umgeschaltet wird zwischen den betreffenden Sende-Schaltzuständen.

Diese Messung kann etwa eine MIMO-FMCW-Messung sein, bei der die Winkelposition eines georteten Radarziels anhand von Amplituden und/oder Phasenbeziehungen zwischen Basisbandsignalen bestimmt wird, die für unterschiedliche Auswahlen von zum Senden und Empfangen verwendeten Antennen des Radarsensors erhalten werden.

Beispielsweise kann für wenigstens einen der Sichtbereiche die zuerst beschriebene Messung ausgeführt werden, die ein Modulationsmuster aufweist, das wenigstens drei der Sequenzen umfasst, für die dieselbe Antenne zum Senden verwendet wird, und für wenigstens einen anderen der Sichtbereiche kann die zuletzt beschriebene Messung mit mehreren zum Senden verwendeten Antennen ausgeführt werden.

Bei einer winkelauflösenden Messung sind Antennen in einer Richtung, in der der Radarsensor winkelauflösend ist, in verschiedenen Positionen angeordnet. Beispielsweise werden mehrere Antennen zum Empfang verwendet. Für ein idealisiertes, annähernd punktförmiges Radarziel in einer jeweiligen Winkelposition besteht zwischen den in verschiedenen Antennen empfangenen Signalen eine charakteristische Phasen- und Amplitudenbeziehung. Die Amplitudenverhältnisse zwischen den empfangenen Signalen sind vom Richtungswinkel und von den Empfindlichkeitskurven der Antennen abhängig. Durch Auswertung der Phasenbeziehungen und/oder Auswertung der Amplitudenbeziehungen ist es möglich, die Winkelposition eines georteten Radarobjektes zu bestimmen.

Die Abhängigkeit der Amplitude und der Phase des von einer Antenne gesendeten und nach Reflexion am Radarziel auf einer Antenne empfangenen Signals von der Winkelposition des georteten Radarziels lässt sich für ein Standardobjekt in einem gegebenen Abstand und mit einer gegebenen Reflektionsstärke in einem Antennendiagramm darstellen. Die Winkelposition eines Radarziels lässt sich beispielsweise bestimmen durch Abgleichen der von den verschiedenen Antennen, oder (im Falle einer MIMO-Messung) für verschiedene Auswahlen von zum Senden und zum Empfangen verwendeten Antennen, für dasselbe Radarziel erhaltenen Amplituden und/oder Phasen mit den entsprechenden Antennendiagrammen.

Da die Messungen der unterschiedlichen Sichtbereiche zeitlich verwoben sind, werden sie annähernd gleichzeitig abgetastet. Spektralwerte, d.h. Amplituden und/oder Phasen, aus den Spektren unterschiedlicher Sichtbereiche können zu einer gemeinsamen Winkelschätzung eines Radarziels verwendet werden, wenn ein Radarziel in einem Überlappungsbereich von Sichtbereichen geortet wird. Es kann ein Abgleich von für die Sichtbereiche separat erstellten Listen von georteten Radarzielen oder Objekten, denen die Radarziele zugeordnet werden, erfolgen.

In Ansprüchen 4 und 5 sind vorteilhafte Verfahrensmerkmale für die Winkelschätzung angegeben.

Vorzugsweise haben innerhalb einer jeweiligen Sequenz aufeinanderfolgende Rampen eine gleiche Rampensteigung und eine gleiche Differenz ihrer Rampenmittenfrequenzen sowie besonders bevorzugt einen gleichen Frequenzhub, wobei die besagte Differenz der Rampenmittenfrequenzen optional ungleich Null ist, und wobei Rampen, welche den gleichen Rampenindex in den jeweiligen Sequenzen der Messungen haben, die gleiche Rampensteigung und die gleiche Rampenmittenfrequenz sowie besonders bevorzugt einen gleichen Frequenzhub aufweisen. Wenn, bis auf die optional ungleich Null gewählte Frequenzdifferenz von Rampe zu Rampe, der Frequenzverlauf aller Rampen aller Sequenzen aller Messungen identisch ist, können die aus der Relativgeschwindigkeit eines Radarziels resultierenden Phasenbeziehungen besonders genau gemessen werden.

Wenn der Zeitversatz zwischen den Sequenzen und der Zeitabstand der Rampen innerhalb einer Sequenz in der gleichen Größenordnung liegen, kann die zur Verfügung stehende Messzeit besonders gut genutzt werden. Außerdem können Einflüsse einer Objektbeschleunigung auf die Phasenbeziehung zwischen den Basisbandsignalen der einzelnen Sequenzen so möglichst klein gehalten werden. Außerdem können so günstige Werte für den Zeitversatz zwischen den Sequenzen und dem Zeitabstand der Rampen innerhalb einer Sequenz gewählt werden, die möglichst "inkommensurabel" sind, also nicht etwa Vielfache voneinander sind. Dementsprechend enthält das Modulationsmuster Pausen zwischen den Rampen. Inbesondere weist das Modulationsmuster vorzugsweise wenigstens eine Pause auf, die regelmäßig zwischen jeweils zwei aufeinanderfolgenden Rampen einer Sequenz wiederkehrt, mit einem Zeitintervall von Pause zu Pause, das gleich dem Zeitintervall zwischen den Rampen einer Sequenz ist.

Vorzugsweise sind während eines überwiegenden Zeitraums des Modulationsmusters abwechselnd Rampen der jeweiligen Sequenzen angeordnet, d.h. die Sequenzen überlappen sich zeitlich weitgehend. Vorzugsweise ist der jeweilige Zeitversatz zwischen Sequenzen kleiner als das Zweifache des Zeitintervalls zwischen den Rampen innerhalb einer jeweiligen Sequenz, besonders bevorzugt kleiner als dieses Zeitintervall. Letzteres ist gleichbedeutend damit, dass in einer Messung eines Sichtbereichs zwischen zwei aufeinanderfolgenden Rampen der ersten Sequenz stets eine jeweilige Rampe der jeweiligen weiteren Sequenzen von Rampen gesendet wird.

Vorzugsweise werden die für jede der Sequenzen gesondert berechneten zweidimensionalen Spektren für einen jeweiligen Sichtbereich zu einem zweidimensionalen Spektrum der Basisbandsignale, insbesondere einem Leistungsspektrum, zusammengeführt, welches in dem Schritt (c) des Bestimmens von Werten für die Relativgeschwindigkeit verwendet wird. Das Zusammenführen ist beispielsweise nicht-phasenkohärent, vorzugsweise eine nicht-phasenkohärente Summation der Quadrate der Absolutbeträge der Spektralwerte zu einem Leistungsspektrum. Dadurch kann die Detektion eines Peaks verbessert werden.

Vorzugsweise wird bei dem Überprüfen der Phasenbeziehung eine Beziehung gemäß der Gleichung

$$\Delta\varphi_{12} = 2\pi\frac{2}{c}f_0 T_{12} v \qquad (2)$$

verwendet, welche eine erwartete Phasendifferenz $\Delta\varphi_{12}$ zwischen einer Phase des Spektralwerts des jeweiligen Spektrums einer weiteren Sequenz und einer Phase des Spektralwerts des Spektrums der ersten Sequenz der Messung für einen Sichtbereich in Beziehung setzt mit dem der weiteren Sequenz zugeordneten Zeitversatz T12 und der Relativgeschwindigkeit v, wobei c die Lichtgeschwindigkeit ist und $f_0$ die mittlere Sendefrequenz ist. Anstelle von T12 und $\Delta\varphi_{12}$ für die zweite Sequenz kann allgemein T1i,m,p bzw. $\Delta\varphi_{1i,m,p}$ für die i-te Sequenz, i>1, ggf. den m-ten Sende-Schaltzustand, und den p-ten Sichtbereich geschrieben werden.

Vorzugsweise wird bei dem Überprüfen der Phasenbeziehung ein von der Relativgeschwindigkeit v abhängiger Steuerungsvektor a(v) einer Messung gemäß der Gleichung

$$a(v) = \frac{1}{\sqrt{I}}\begin{vmatrix} 1 \\ \mathsf{M} \\ e^{2\pi j\frac{2}{c}f_0 T_{1i} v} \end{vmatrix} \qquad (3)$$

verwendet, wobei I die Anzahl der Sequenzen ist, i=1,...,I die Sequenzen zählt, und in der i-ten Komponente des Vektors Tli für i>1 der der i-ten Sequenz zugeordete Zeitversatz gegenüber der ersten Sequenz ist. Der Steuerungsvektor a(v) ist in dieser Notation ein Spaltenvektor, dessen Komponenten jeweils den erwarteten Phasenunterschied der i-ten Sequenz gegenüber der Teilmessung der ersten Sequenz beschreiben, wobei der erwartete Phasenunterschied jeweils als Phase einer komplexen Exponentialfunktion bestimmt ist. Die Anzahl der Komponenten des Vektors ist I. Der gemeinsame Vorfaktor ist ein Normierungsfaktor. Im Exponenten der Exponentialfunktion bezeichnet j die imaginäre Einheit, sofern nicht anders angegeben. Anstelle von a(v) und Tli kann allgemein a(v,m,p) bzw. T1i,m,p für ggf. den m-ten Sende-Schaltzustand und für den p-ten Sichtbereich geschrieben werden, wobei I für jeweilige Sichtbereiche p durch eine Anzahl $I_p$ ersetzt wird.

Die Kenntnis des Steuerungsvektors a(v) erlaubt es, eine (unter geeigneten Bedingungen eindeutige) Beziehung zwischen der Relativgeschwindigkeit v des Radarziels und den empfangenen komplexen Spektralwerten an der Position des Peaks herzustellen und aus den Phasenbeziehungen der empfangenen Signale auf die Relativgeschwindigkeit v des Radarziels zu schließen. Da in der Praxis die empfangenen Signale jedoch mehr oder weniger verrauscht sein werden, lässt sich die Geschwindigkeit nicht exakt berechnen, sondern lediglich schätzen, beispielsweise mit Hilfe einer Maximum-Likelihood-Schätzung. Diese wird für die unterschiedlichen Sichtbereiche separat durchgeführt.

Ein Messvektor wird beispielsweise für einen Empfangskanal n, ggf. einen Sende-Schaltzustand m, und einen Sichtbereich p definiert als

$$a_{k,l}(n,m,p) = \begin{vmatrix} x_1(n,m,p) \\ M \\ x_{I_p}(n,m,p) \end{vmatrix} \qquad (4)$$

wobei mit i=1,...,$I_p$, in der i-ten Komponente des Vektors $x_i(n)$ einen komplexen Spektralwert des zweidimensionalen Spektrums des der abgetasteten Basisbandsignale der i-ten Sequenz von Rampen des Empfangskanals n bezeichnet, wobei n die Empfangskanäle zählt mit n=1,...,N bei N Empfangskanälen.

Vorzugsweise wird in Schritt (d) im Falle einer Störung der Phasenbeziehung zwischen den besagten Spektralwerten, die einer Situation entspricht, in welcher zwei Radarziele mit unterschiedlicher Relativgeschwindigkeit die gleiche Position in dem wenigstens einen zweidimensionalen Spektrum belegen, das Vorliegen der Störung daran erkannt, dass ein erwarteter Grad der Übereinstimmung der Phasenbeziehung mit den erwarteten Phasenbeziehungen nicht erreicht wird.

## KURZBESCHREIBUNG DER ZEICHNUNGEN

Im folgenden werden Ausführungsbeispiele anhand der Zeichnung näher erläutert.

Es zeigen:

Fig. 1 ein Diagramm eines FMCW-Radarsensors mit zwei Sende-Antennen und vier Empfangs-Antennen für MIMO-Radarmessungen sowie einer weiteren Sendeantenne;

Fig. 2 ein Modulationsmuster mit sieben Sequenzen gleichartiger Rampen, die wiederholt gesendet werden;

Fig. 3 ein Geschwindigkeits/Abstands-Diagramm mit mit einem vorbestimmten Intervall periodischen Werten der Relativgeschwindigkeit eines Radarziels; und

Fig. 4 ein detaillierteres Blockdiagramm einer Auswerteeinrichtung eines FMCW-Radarsensors.

## DETAILLIERTE BESCHREIBUNG VON AUSFÜHRUNGSBEISPIELEN

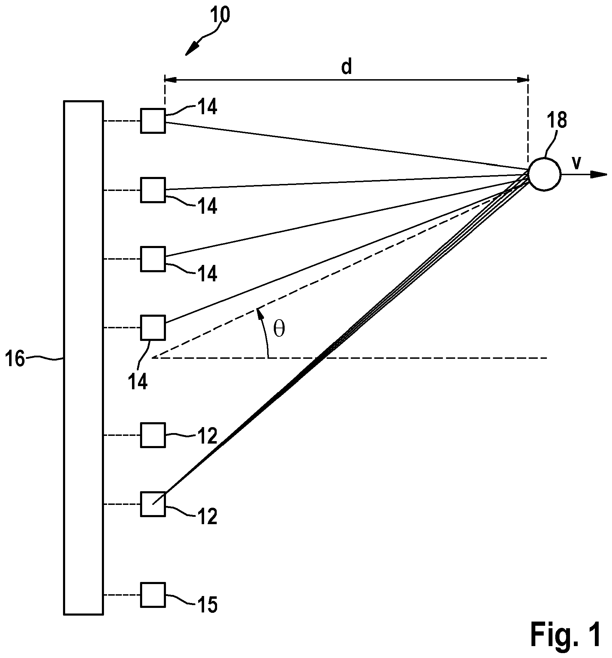

In Fig. 1 ist ein Diagramm eines einfachen Beispiels eines (MIMO) FMCW-Radarsensors 10 dargestellt, der in diesem Beispiel zwei Sende-Antennen 12 und vier Empfangs-Antennen 14 für MIMO-Messungen in einem ersten Sichtbereich sowie eine weitere Antenne 15 mit einem anderen Sichtbereich aufweist. In der Praxis sind größere Anzahlen der Antennen möglich. Die Sende-Antennen 12, 15 werden von einer Steuer- und Auswerteeinheit 16 gespeist und emittieren Radarsignale, die an einem Objekt 18 reflektiert und von jeder der Empfangs-Antennen 14 empfangen werden. Der Sichtbereich der Sende-Antenne 15 hat eine größere Reichweite und einen schmaleren Öffnungswinkel als der Sichtbereich der Sende-Antennen 12. Die Sende- und Empfangs-Antennen können jeweils aus einem Patch-Antennen-Array bestehen.

Die empfangenen Signale werden zu Basisbandsignalen heruntergemischt und in der Steuer- und Auswerteeinheit 16 ausgewertet. Der Radarsensor 10 ist beispielsweise vorn in einem Kraftfahrzeug eingebaut ist und dient dazu, Abstände d, Winkel und Relativgeschwindigkeiten v von Objekten 18 zu messen, beispielsweise von vorausfahrenden Fahrzeugen. Die Frequenz des Sendesignals wird innerhalb einer Radarmessung mit Sequenzen von steigenden oder fallenden Rampen moduliert.

Lediglich aus Gründen der Übersichtlichkeit ist hier ein bistatisches Antennensystem dargestellt worden, bei dem die Sende-Antennen 12, 15 von den Empfangs-Antennen 14 verschieden sind. In der Praxis kann auch ein monostatisches Antennenkonzept benutzt werden, bei dem zum Senden und zum Empfangen jeweils gleiche Antennen benutzt werden.

Die Antennen 12, 14 sind in einer Richtung, in welcher der Radarsensor 10 winkelauflösend ist, in verschiedenen Positionen angeordnet. In diesem Beispiel sind die Empfangs-Antennen 14 in gleichmäßigen Abständen auf einer Geraden angeordnet (ULA; Uniform Linear Array). Das gleiche gilt auch für die Sende-Antennen 12, wobei die Sende- und Empfangs-Antennen nicht notwendigerweise auf derselben Geraden angeordnet sein müssen. Wenn der Radarsensor zur Messung von Azimutwinkeln der Objekte eingesetzt werden soll, verlaufen die Geraden, auf denen die Antennen angeordnet sind, waagerecht. Bei einem Sensor zur Messung von Elevationswinkeln wären die Antennen hingegen auf vertikalen Geraden angeordnet. Denkbar ist auch zweidimensionales Antennenarray, mit dem sowohl Azimutwinkel als auch Elevationswinkel gemessen werden können.

Im gezeigten Beispiel wird der Radarsensor 10 im Zeitmultiplex-Verfahren betrieben, wobei Messungen mit unterschiedlichen Sichtbereichen zeitlich miteinander verwoben sind. Zu jedem Zeitpunkt ist maximal eines der Sende-Antennen 12, 15 aktiv und sendet das Sendesignal. Die Aktivitätsphasen der einzelnen Antennen 12, 15 wechseln einander zyklisch ab. In Fig. 1 ist der Fall dargestellt, in dem nur das untere der beiden Sende-Antennen 12 aktiv ist.

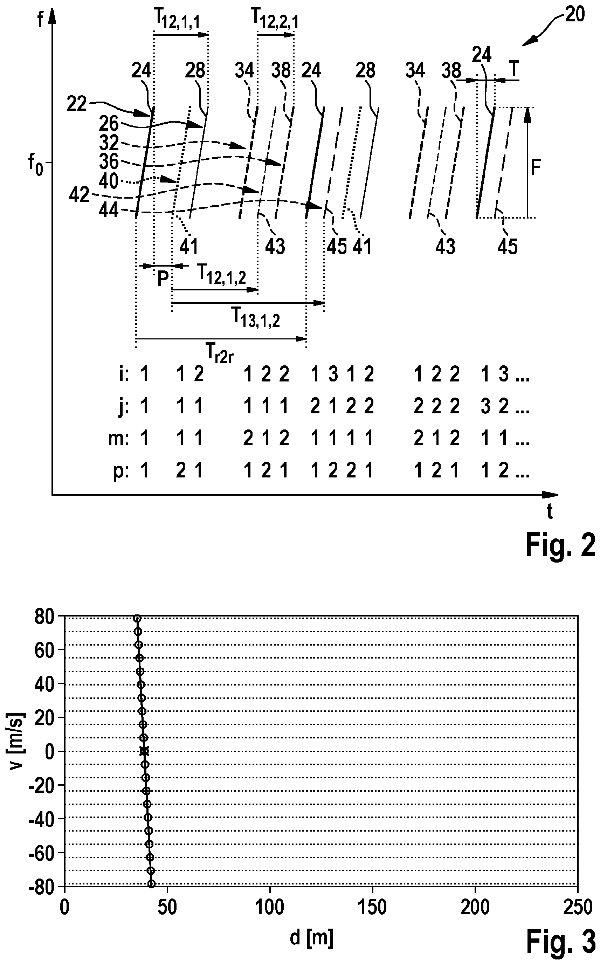

Fig. 2 zeigt die Sendefrequenz f des Sendesignals 20 aufgetragen über der Zeit t.

Bei einer Messung für den Sichtbereich der Sende-Antennen 12 werden mit jeder Sende-Antenne 12 zwei Sequenzen 22, 26 bzw. 32, 36 von Rampen 24, 28 bzw. 34, 38 mit identischen Rampenparametern gesendet, die ineinander zeitlich verschachtelt sind. Zwischen den Sequenzen 22, 26 haben die Rampen 24, 28 mit gleichem Rampenindex j einen Zeitversatz T12,1,1. Zwischen den Sequenzen 32, 36 haben die Rampen 34, 38 mit gleichem Rampenindex j einen Zeitversatz T12,2,1. Innerhalb der Sequenz 22 haben die Rampen 24, 28 mit gleichem Rampenindex j einen Zeitversatz T12,1,1.

Bei einer Messung für den Sichtbereich der Sende-Antenne 15 werden mit der Sende-Antenne 15 drei Sequenzen 40, 42, 44 von Rampen 41, 43 bzw. 45 gesendet, die ineinander zeitlich verschachtelt sind. Zwischen den Sequenzen 40, 42, 44 haben die Rampen 43 jeweils einen Zeitversatz T12,1,2 zu den Rampen 41 mit gleichem Rampenindex j, und die Rampen 45 haben jeweils einen Zeitversatz T13,1,2 zu den Rampen 41 mit gleichem Rampenindex.

Allgemein wird für den Sichtbereich p und einen Sende-Schaltzustand m, entsprechend der Auswahl einer Sende-Antenne, der Zeitversatz einer weiteren Sequenz i zu einer ersten Sequenz hier und im folgenden bezeichnet als T1i,m,p. Für die Sende-Antenne 15 (p=2) ist stets m=1.

Innerhalb jeder Sequenz sind die aufeinanderfolgenden Rampen zueinander um einen Zeitabstand Tr2r verschoben. Der Zeitabstand Tr2r ist für alle Sequenzen aller Sichtbereiche gleich. Eine Pause P ist jeweils zwischen zwei aufeinanderfolgenden Rampen einer Sequenz vorhanden.

In dem in Fig. 2 dargestellten Beispiel ist die Differenz der Rampenmittenfrequenzen von innerhalb einer Sequenz aufeinanderfolgenden Rampen gleich Null. Daher haben alle Rampen denselben Frequenzverlauf. Die Rampenmittenfrequenz entpricht hier der mittleren Sendefrequenz $f_0$.

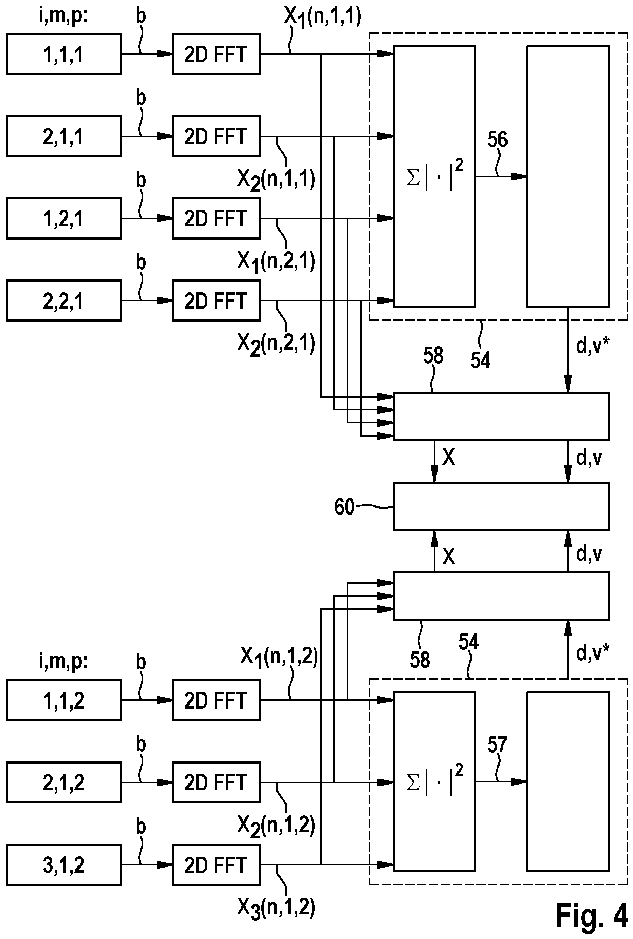

Fig. 4 zeigt schematisch ein detaillierteres Blockdiagramm der von der Steuer- und Auswerteeinheit 16 durchgeführten Operationen zur Bestimmung der Relativgeschwindigkeit v, des Abstands d und des Objektwinkels θ. Zur Vereinfachung der Darstellung ist die Verarbeitung nur für einen Empfangskanal n dargestellt, entsprechend einer jeweiligen Antenne 14.

Für jede Sequenz i einer Sende-Antenne m eines Sichtbereichs p werden die empfangenen, abgetasteten Basisbandsignale $b_{i,m,p}$ jeweils einer zweidimensionalen Fourier-Transformation (2D-FFT) unterzogen. Die erste Dimension entspricht einer Transformation der zu den einzelnen Rampen erhaltenen Basisbandsignale. Die zweite Dimension entspricht einer Transformation über die Sequenz der Rampen, d.h. über den Rampenindex j. Zu jeder Sequenz i wird so im Empfangskanal n ein zweidimensionales Spektrum $X_i(n,m,p)$ erhalten. Für einen jeweiligen Sichtbereich sind die Größen der jeweiligen Transformationen, d.h. die jeweiligen Anzahlen der bins (Abtastpunkte oder Stützstellen), vorzugsweise für die erste Dimension einheitlich für alle Spektren, und für die zweite Dimension einheitlich für alle Spektren.

Aufgrund der Relativgeschwindigkeit v des Radarziels 18 und dem Zeitversatz T1i,m,p zwischen den einzelnen Sequenzen entsprechenden Teilmessungen wird ein Phasenunterschied zwischen den komplexen Amplituden (Spektralwerten) eines in den zweidimensionalen Spektren an der gleichen Position (k,l) auftretenden Peaks $X_1(n,m,p)(k,l)$, $X_i(n,m,p)(k,l)$ erhalten. Der Phasenunterschied $\Delta\varphi_{1i,m,p}$ ist beispielhaft in Gleichung (2) angegeben. Aufgrund des relativ großen Zeitversatzes T1i,m,p erlaubt die Bestimmung des Phasenunterschieds zwischen zwei Teilmessungen mit derselben Sende-Antenne jedoch keinen direkten Rückschluss auf die Relativgeschwindigkeit v. Denn aufgrund der Periodizität der Phasen ergibt sich aus dem Phasenunterschied (bzw. den beiden Phasenunterschieden bei p=2) eine Mehrdeutigkeit für den dazugehörigen Wert der Relativgeschwindigkeit v.

Zu jedem Sichtbereich p werden aus den erhaltenen Spektren $X_i(n,m,p)$ in einem ersten Funktionsblock 54 jeweils Leistungsspektren berechnet durch Bildung des Quadrates des Absolutbetrags der jeweiligen Spektralwerte. Die Leistungsspektren werden durch Summation oder Mittelung punktweise zusammenführt zu einem integrierten zweidimensionalen Leistungsspektrum 56, 57.

Die Position eines einem Radarziel 18 entsprechenden Peaks im Leistungsspektrum 56, 57, die hier als Bin k, l angegeben wird, entspricht der Position des Peaks in den einzelnen Spektren $X_i(n,m,p)$. Aus der ersten Dimension, entsprechend dem Bin k der Position des Peaks, wird gemäß der FMCW-Gleichung k = 2/c(dF + $f_0$vT) ein linearer Zusammenhang zwischen der Relativgeschwindigkeit v und dem Abstand d des Radarziels erhalten. Dabei ist c die Lichtgeschwindigkeit, F der Rampenhub, T die Rampendauer einer einzelnen Rampe und $f_0$ die mittlere Sendefrequenz. Wenn die Frequenzdifferenz von aufeinanderfolgenden Rampen einer Sequenz gleich Null ist, enthält die Peakposition in der zweiten Dimension l nur Information über die Relativgeschwindigkeit v des Radarziels.

Fig. 3 zeigt schematisch ein Diagramm, in dem die Relativgeschwindigkeit v über dem Abstand d aufgetragen ist. Die lineare Beziehung zwischen v und d ist als Gerade eingezeichnet. Im Beispiel ist die aus der Abtastung der Dopplerfrequenz erhaltene Information über die Relativgeschwindigkeit des Radarziels mit einer Mehrdeutigkeit gemäß dem vorbestimmten Intervall nach Gleichung (1) behaftet. Zusätzlich zu der v-d-Geraden, die sich gemäß dem Frequenzbin k ergibt, sind die aus dem Frequenzbin l bestimmten, periodischen Werte der Relativgeschwindigkeit v durch gestrichelte Linien dargestellt. Die Schnittpunkte mit der v-d-Geraden sind gekennzeichnet. Sie entsprechen möglichen Wertepaaren (v, d) von Relativgeschwindigkeit und Abstand des Radarziels 18. Das tatsächliche Ziel, dessen Geschwindigkeit v bestimmt werden soll, ist durch ein Kreuz X markiert.

Die Mehrdeutigkeit der ermittelten Geschwindigkeit v wird nun, separat für die Sichtbereiche p, aufgelöst, wie nachfolgend erläutert wird. Die Information v* über die in Frage kommenden, periodischen Werte der Relativgeschwindigkeit v wird an einen zweiten Funktionsblock 58 übergeben, ebenso die komplexen, zweidimensionalen Spektren $X_i(n,m,p)$ der Teilmessungen.

Zur Auswertung des gemessenen Phasenunterschieds wird ein Steuerungsvektor a(v) einer idealen Messung in Abhängigkeit von v berechnet gemäß der Gleichung (3), die hier für l=2 Sequenzen lautet:

$$a(v,m,p) = \frac{1}{\sqrt{2}} \begin{pmatrix} 1 \\ e^{2\pi j \frac{2}{c} f_0 T_{12,m,p} v} \end{pmatrix}$$

Der Messvektor $a_{k,l}(n,m,p)$ ist entsprechend definiert, wobei anstelle der erwarteten, geschwindigkeitsabhängigen komplexen Werte die komplexen Amplituden (Spektralwerte) an der Position k,l des Peaks der zweidimensionalen Spektren der Teilmessungen als Komponenten des Vektors eingesetzt werden, wie in Gleichung (4) angegeben; eine Normierung erfolgt in der Definition der Likelihood-Funktion.

Anhand der Messvektoren und Steuerungsvektoren wird eine normierte Likelihood-Funktion in Form eines Relativgeschwindigkeitsspektrums S(v,p) definiert als:

$$S(v,p) = \frac{1}{\sum_{m=1}^{M_p}\sum_{n=1}^{N_p}\left|a_{k,l}^H(n,m,p)\right|^2} \sum_{m=1}^{M_p}\sum_{n=1}^{N_p}\left|a_{k,l}^H(n,m,p)a(v,m,p)\right|^2$$

Dabei bezeichnet $a_{k,l}^H(n,m,p)$ den hermetisch adjungierten Vektor zum Messvektor $a_{k,l}(n,m,p)$ also einen Zeilenvektor, bei dem die einzelnen Komponenten komplex konjugiert zu den Komponenten des Vektors $a_{k,l}(n,m,p)$ sind. Die Likelihood-Funktion entspricht somit für einen jeweiligen Sichtbereich p einer normierten Summe der Betragsquadrate der (komplexen) Skalarprodukte zwischen dem Messvektor und dem Steuerungsvektor der Übertragungskanäle, wobei die Summation über die unterschiedlichen Übertragungskanäle ausgeführt wird, wobei ein Übertragungskanal jeweils eine Kombination von Empfangskanal n und Sende-Schaltzustand m bezeichnet.

Das Relativgeschwindigkeitsspektrum S(v,p) entspricht im allgemeinen einer Überlagerung periodischer Funktionen der Relativgeschwindigkeit v. Die Maxima der Likelihood-Funktion entsprechen den wahrscheinlichsten Werten des Parameters v. Für sich alleine genommen ist das Relativgeschwindigkeitsspektrum S(v,p) mehrdeutig. Ein Maximum entspricht jeweils einer im Mittel optimalen Übereinstimmung der sich für den betreffenden Wert von v ergebenden, idealen Phasenverschiebungen mit den gemessenen Phasenverschiebungen gemäß den Messvektoren. Eine Auswertung der Funktion S(v,p) ist jedoch lediglich an den Stellen erforderlich, die den periodischen Werten der Relativgeschwindigkeit v entsprechen, die aus den Auswertungen gemäß der Position des Peaks in den Bins (k, l) erhalten wurden. Im Beispiel sei angenommen, dass sich eine maximale Übereinstimmung bei der tatsächlichen Relativgeschwindigkeit v = 0 m/s ergibt, wo die Funktion S(v,p) den erwarteten Maximalwert 1 annimmt.

Die Mehrdeutigkeit, die sich aus der Position des Peaks ergibt, kann somit durch die zusätzliche Information aus der Phasenbeziehung aufgelöst werden. Anhand des linearen Zusammenhangs wird ein zu dem ausgewählten Schätzwert für die Relativgeschwindigkeit v gehörender Schätzwert für den Abstand d bestimmt.

Der zweite Funktionsblock 58 gibt die ermittelten Schätzwerte für die Relativgeschwindigkeit v und den Abstand d sowie die komplexen Amplituden X der Peaks für beide Sichtbereiche p an einen Winkelschätzer 60 aus. Beispielsweise kann die geschätzte Relativgeschwindigkeit v zur Kompensation der durch die Relativgeschwindigkeit v verursachten Phasenverschiebungen der Spektralwerte der einzelnen Sequenzen gegenüber einer Bezugssequenz genutzt werden.

Die den unterschiedlichen Sequenzen von Rampen entsprechenden Zeitsignale (Basisbandsignale) werden somit zunächst getrennt verarbeitet. Die Detektion eines Radarziels 18 findet dann in dem durch nicht-kohärente Integration gewonnenen Leistungsspektrum 56 statt. Basierend auf der Detektion und den komplexen Amplituden an der Position des Peaks wird dann die Mehrdeutigkeit der Geschwindigkeit v aufgelöst.

Vorzugsweise wird, wie beschrieben, die nicht-kohärente Zusammenführung der Spektren zum Leistungsspektrum 56 für alle Empfangskanäle und alle Sende-Antennen gemeinsam durchgeführt. Dies verbessert die Peak-Detektion.

In Einzelfällen kann es vorkommen, dass zwei Radarziele mit unterschiedlichem Abstand und unterschiedlicher Geschwindigkeit dieselbe Peakposition (k,l) in den Spektren 56, 57 haben. Die gemessenen Phasenbeziehungen lassen sich dann nicht einer einzigen Relativgeschwindigkeit eines Radarziels zuordnen. Die Auswerteeinrichtung 16 kann dazu eingerichtet sein, eine solche Störung der Messung zu erkennen anhand einer einen Schwellwert überschreitenden Abweichung der maximalen Übereinstimmung, d.h. dem Maximalwert der in Frage kommenden Werte des Relativgeschwindigkeitsspektrums S(v,p), von dem erwarteten Maximalwert 1. Die Auswerteeinrichtung 16 kann dann ein Störungssignal ausgeben. Eine vorübergehend auftretende Mehrfachbelegung eines Peaks im Spektrum 56, 57 kann aber auch daran erkannt werden, dass die Auswerteeinrichtung 16 bei einem anhand der geschätzten Werte von v und d eines Radarziels 18 durchgeführten Trackings von detektierten Objekten über mehrere Messzyklen eine Fehldetektion erkennt.

Vorzugsweise werden für mehrere, nacheinander ausgeführte Radarmessungen unterschiedlichen Modulationsparameter der Rampen verwendet, beispielsweise unterschiedliche Mittenfrequenzen, Rampensteigungen, Zeitabstände Tr2r und/oder Zeitversätze T1i,m,p. Dadurch können zufällige Mehrfachbelegungen von Peakpositionen auf Einzelfälle beschränkt werden.

Anstelle einer nicht-kohärenten Zusammenführung der einzelnen Spektren zu dem Leistungsspektrum 56 bzw. 57 ist es auch denkbar, Empfangskanäle n mittels digitaler Strahlformung (beam forming) zu einem Empfangskanal zusammenzufassen. Dabei werden z.B. für den jeweiligen Sichtbereich p und ggf. Sende-Schaltzustand m die Spektren bzw. Messvektoren von N Empfangskanälen kohärent, d.h. unter Berücksichtigung der Phase, mit jeweiligen Gewichtungsfaktoren addiert. In den Beziehungen für S(v,p) entfallen dann dementsprechend die Summationen über n.

Zusätzlich oder anstelle der Spektren X der Basisbandsignale können die Basisbandsignale b auch direkt an den Winkelschätzer 60 ausgegeben werden, oder es können separat aus den Basisbandsignalen b berechnete Spektren an den Winkelschätzer ausgegeben werden.

## Patentansprüche

1. Verfahren zum Orten eines Radarziels (18), bei dem FMCW-Radarmessungen mit Sende-Antennen (12; 15) mit unterschiedlichen Sichtbereichen (p), die sich in einem Öffnungswinkel und/oder in einer Reichweite unterscheiden, ausgeführt werden, wobei empfangene Signale zu Basisbandsignalen (b) heruntergemischt werden, wobei das Verfahren die Schritte umfasst, dass:

(a) in einem Messzyklus für die unterschiedlichen Sichtbereiche (p) jeweils eine Messung ausgeführt wird, bei der ein rampenförmig frequenzmoduliertes Sendesignal (20) gesendet wird, dessen Modulationsmuster mehrere zeitlich verschachtelte Sequenzen (22; 26; 32; 36; 40; 42; 44) von Rampen (24; 28; 34; 38; 41; 43; 45) umfasst, die innerhalb der jeweiligen Sequenz mit einem Zeitintervall (Tr2r) zeitversetzt aufeinander folgen, wobei die Sequenzen der Messungen mit unterschiedlichen Sichtbereichen (p) zeitlich miteinander verwoben sind, so dass in Lücken zwischen den Rampen einer Sequenz Rampen der jeweils anderen Sequenzen angeordnet sind und wobei in einem regelmäßigen Muster zwischen den Sichtbereichen (p) gewechselt wird, wobei für wenigstens einen der Sichtbereiche (p) die Messung ein Modulationsmuster aufweist, das wenigstens zwei verschiedene, regelmäßig wiederkehrende Zeitversätze (T12,1; T12,2) zwischen Rampen (24, 28; 34, 38) unterschiedlicher Sequenzen (22, 26; 32, 36) mit gleichem, die Rampen in der jeweiligen Sequenz zählenden Rampenindex (j) innerhalb der jeweiligen Sequenz aufweist, wobei diese Zeitversätze (T12,1; T12,2) sich von dem Zeitintervall (Tr2r) unterscheiden, mit dem die Rampen innerhalb einer jeweiligen Sequenz aufeinander folgen,

(b) aus den Basisbandsignalen (b) gesondert für jede der Sequenzen (22; 26; 32; 36; 40; 42; 44) durch zweidimensionale Fourier-Transformation ein zweidimensionales Spektrum (X) berechnet wird, wobei in der ersten Dimension Rampe für Rampe transformiert wird und in der zweiten Dimension über den Rampenindex (j) transformiert wird,

(c) für den wenigstens einen der Sichtbereiche (p) anhand einer Position (k, l) eines Peaks in wenigstens einem zweidimensionalen Spektrum (56) der Basisbandsignale (b) des jeweiligen Sichtbereichs Werte für die Relativgeschwindigkeit (v) eines in dem jeweiligen Sichtbereich erfassten Radarziels (18) bestimmt werden, die mit einer vorbestimmten Geschwindigkeitsperiode periodisch sind,

(d) für den wenigstens einen der Sichtbereiche (p) wenigstens eine Phasenbeziehung zwischen Spektralwerten, die an jeweils der gleichen Position (k, l) in den gesondert berechneten zweidimensionalen Spektren (X) des Sichtbereichs (p) erhalten werden, auf Übereinstimmung mit erwarteten Phasenbeziehungen (a(v,m,p)) für mehrere der bestimmten periodischen Werte der Relativgeschwindigkeit (v) des erfassten Radarziels (18) überprüft wird, und

(e) für den wenigstens einen der Sichtbereiche (p) aus den bestimmten, periodischen Werten der Relativgeschwindigkeit (v) anhand des Ergebnisses der Überprüfung ein Schätzwert für die Relativgeschwindigkeit (v) des in dem jeweiligen Sichtbereich erfassten Radarziels (18) ausgewählt wird.

2. Verfahren nach Anspruch 1, bei dem für wenigstens einen der Sichtbereiche (p) die Messung ein Modulationsmuster aufweist, das wenigstens drei der Sequenzen (40; 42; 44) umfasst, für die dieselbe Antenne (15) zum Senden verwendet wird,

wobei diese Sequenzen untereinander in Bezug auf eine erste der Sequenzen (40) unterschiedliche, einer jeweiligen weiteren der Sequenzen (42; 44) zugeordnete Zeitversätze (T12,m,p; T13,m,p) aufweisen.

3. Verfahren nach Anspruch 1 oder 2, bei dem für wenigstens einen der Sichtbereiche (p) die Messung mit mehreren zum Senden verwendeten Antennen (12) ausgeführt wird, wobei wenigstens zwei unterschiedliche Sende-Schaltzustände (m), die sich in der Auswahl der zum Senden verwendeten Antennen (12) unterscheiden, verwendet werden,

wobei diesen Sende-Schaltzuständen (m) jeweils wenigstens zwei der Sequenzen (22; 26; 32; 36) zugeordnet sind, die zeitlich ineinander verschachtelt sind und untereinander in Bezug auf eine erste der Sequenzen (22; 32) einen einer jeweiligen weiteren der Sequenzen (26; 36) zugeordneten Zeitversatz (T12,m,p) aufweisen,

wobei bei diesen unterschiedlichen Sende-Schaltzuständen (m) den weiteren Sequenzen (26; 36) unterschiedliche Zeitversätze (T12,1,p; T12,2,p) zugeordnet sind, und

wobei zwischen aufeinander folgenden Rampen (24; 28; 34; 38) der Messung, die unterschiedlichen Sende-Schaltzuständen (m) zugeordnet sind, umgeschaltet wird zwischen den betreffenden Sende-Schaltzuständen (m).

4. Verfahren nach einem der vorstehenden Ansprüche,

bei dem für wenigstens zwei der Sichtbereiche (p) die jeweilige Messung eine winkelauflösende Messung ist, die mit unterschiedlichen Auswahlen von mehreren zum Senden und/oder zum Empfangen verwendeten Antennen (12, 15; 14) ausgeführt wird,

wobei eine Winkelposition (θ) eines in mehreren der Sichtbereiche (p) georteten Radarziels (18) anhand von Amplituden und/oder Phasen an der Position (k,l) eines dem Radarziel (18) entsprechenden Peaks in zweidimensionalen Spektren (X) der Basisbandsignale (b) der Messungen der mehreren Sichtbereiche (p) bestimmt wird, die für die unterschiedlichen Auswahlen der zum Senden und/oder zum Empfangen verwendeten Antennen (12, 15; 14) erhalten werden.

5. Verfahren nach einem der vorstehenden Ansprüche,

bei dem für wenigstens zwei der Sichtbereiche (p) die jeweilige Messung eine winkelauflösende Messung ist, die mit unterschiedlichen Auswahlen von mehreren zum Senden und/oder zum Empfangen verwendeten Antennen (12, 15; 14) ausgeführt wird,

wobei zum Orten von Radarzielen (18) eine Suche nach Peaks in zweidimensionalen Spektren (56; 57) der Basisbandsignale (b) der Messungen der jeweiligen Sichtbereiche (p) durchgeführt wird,

wobei eine Winkelposition (θ) eines in einem jeweiligen Sichtbereich (p) georteten Radarziels (18) anhand von Amplituden und/oder Phasen an der Position (k,l) eines dem Radarziel (18) entsprechenden Peaks in zweidimensionalen Spektren (X) der Basisbandsignale (b) bestimmt wird, die für die unterschiedlichen Auswahlen der zum Senden und/oder zum Empfangen verwendeten Antennen (12, 15; 14) erhalten werden, wobei in einem Fall, bei dem ein Radarziel (18) in wenigstens einem der Sichtbereiche (p) geortet wurde an einer Position (d,θ), die aufgrund ihres Abstands (d) und/oder ihrer Winkelposition (θ) in einem Überlappungsbereich des Sichtbereichs (p) mit einem anderen der Sichtbereiche (p) liegt, in welchem Sichtbereich das Radarziel (18) nicht geortet wurde, ergänzend Amplituden und/oder Phasen an der dem Radarziel (18) entsprechenden Position (k,l) in zweidimensionalen Spektren (X) der Basisbandsignale der Messung des anderen Sichtbereichs (p) zur Bestimmung oder Korrektur der Winkelposition (θ) herangezogen werden.

6. Verfahren nach einem der vorstehenden Ansprüche, bei dem innerhalb einer jeweiligen Sequenz (22; 26; 32; 36; 40; 42; 44) aufeinanderfolgende Rampen (24; 28; 34; 38; 41; 43; 45) eine gleiche Rampensteigung (F/T) haben und eine gleiche Differenz ihrer Rampenmittenfrequenzen haben,
wobei die besagte Differenz der Rampenmittenfrequenzen optional ungleich Null ist, und
wobei Rampen (24; 28; 34; 38; 41; 43; 45), welche den gleichen Rampenindex (j) in den jeweiligen Sequenzen (22; 26; 32; 36; 40; 42; 44) der Messungen haben, die gleiche Rampensteigung (F/T) und die gleiche Rampenmittenfrequenz aufweisen.

7. Verfahren nach einem der vorstehenden Ansprüche, bei dem die Rampen (24; 28; 34; 38; 41; 43; 45) der Sequenzen der Messungen den gleichen Frequenzhub (F) haben.

8. Verfahren nach einem der vorstehenden Ansprüche, bei dem für den wenigstens einen der Sichtbereiche (p), separat für den jeweiligen Sichtbereich (p), die für jede der Sequenzen (22; 26; 32; 36; 40; 42; 44) gesondert berechneten zweidimensionalen Spektren (X) zu einem zweidimensionalen Spektrum (56) der Basisbandsignale (b) zusammengeführt werden, welches in dem Schritt (c) des Bestimmens von Werten für die Relativgeschwindigkeit (v) verwendet wird.

9. Verfahren nach einem der vorstehenden Ansprüche, wobei bei dem Überprüfen der Phasenbeziehung eine Beziehung gemäß der Gleichung

$$\Delta \varphi_{12} = 2\pi \frac{2}{c} f_0 T_{12} v$$

verwendet wird, welche eine erwartete Phasendifferenz $\Delta \varphi_{12}$ zwischen einer Phase des Spektralwerts des jeweiligen Spektrums (X) einer weiteren Sequenz (26) und einer Phase des Spektralwerts des Spektrums (X) der ersten Sequenz (22) in Beziehung setzt mit dem der weiteren Sequenz (26) zugeordneten Zeitversatz T12 und der Relativgeschwindigkeit v, wobei c die Lichtgeschwindigkeit ist und $f_0$ die mittlere Sendefrequenz ist.

10. Verfahren nach einem der vorstehenden Ansprüche, wobei für den jeweiligen Sichtbereich (p) bei dem Überprüfen der Phasenbeziehung auf Übereinstimmung mit erwarteten Phasenbeziehungen das Quadrat eines Absolutbetrags eines komplexen Skalarproduktes $a_{k,l}^{H} a(v)$ eines Messvektors $a_{k,l}$ mit einem von dem Wert v der Relativgeschwindigkeit abhängigen Steuerungsvektor a(v) berechnet wird, wobei die Komponenten des Messvektors $a_{k,l}$ die Spektralwerte der für die Sequenzen gesondert berechneten Spektren (X) an der Position (k,l) des Peaks sind, wobei $a_{k,l}^{H}$ der hermitesch adjungierte Vektor zu $a_{k,l}$ ist, und wobei der Steuerungsvektor a(v) ein Steuerungsvektor einer idealen Messung für ein Radarziel mit einer Relativgeschwindigkeit v ist, wobei die Komponenten des Steuerungsvektors a(v) bis auf einen gemeinsamen Normierungsfaktor jeweils die für den der jeweiligen Sequenz (26; 36; 42; 44) zugeordneten Zeitversatz (T12) erwartete Phasendifferenz ($\Delta \varphi_{12}$) zur ersten Sequenz (22; 32; 40) sind, wobei die erste Komponente des Steuerungsvektors a(v) bis auf den gemeinsamen Normierungsfaktor gleich 1 ist.

11. Verfahren nach einem der vorstehenden Ansprüche, wobei bei dem Überprüfen der Phasenbeziehung auf Übereinstimmung mit erwarteten Phasenbeziehungen ein jeweiliger Grad einer Übereinstimmung S(v) bestimmt wird gemäß der Beziehung:

$$S(v) = \frac{1}{\sum_{(m,n)\in MN} \left| a_{k,l}^{H}(n,m) \right|^2} \sum_{(m,n)\in MN} \left| a_{k,l}^{H}(n,m) a(v,m) \right|^2$$

wobei MN Kombinationen von Empfangskanälen n und gegebenenfalls sich in der Auswahl von zum Senden verwendeter Antennen (12) unterscheidenden Sende-Schaltzuständen m sind, $a_{k,l}(n,m)$ ein Messvektor ist, dessen Komponenten die Spektralwerte der für die Basisbandsignale (b) der einzelnen Sequenzen (22; 26; 32; 36) des Sende-Schaltzustands m und für die einzelnen Empfangskanäle n jeweils gesondert berechneten Spektren (X) an der Position (k,l) des Peaks sind, $a_{k,l}^{H}(n,m)$ der hermitesch adjungierte Vektor zu $a_{k,l}(n,m)$ ist, und a(v,m) ein Steuerungsvektor der idealen Messung mit dem Sende-Schaltzustand m für ein Radarziel mit einer Relativgeschwindigkeit v ist.

12. FMCW-Radarsensor mit einer Steuer- und Auswerteeinrichtung (16), in der ein Verfahren nach einem der Ansprüche 1 bis 11 implementiert ist.

**Claims**

1. Method for locating a radar target (18), in which FMCW radar measurements are carried out using transmitter antennas (12; 15) with different fields of view (p), which differ in terms of an aperture angle and/or in terms of range, the received signals being downmixed to form baseband signals (b),
   wherein the method comprises the following steps such that:

   (a) in a measurement cycle, a measurement is carried out for each of the different fields of view (p), within the scope of which measurement a ramp-shaped frequency modulated transmission signal (20) is transmitted, the modulation pattern of which comprises a plurality of time-nested sequences (22; 26; 32; 36; 40; 42; 44) of ramps (24; 28; 34; 38; 41; 43; 45), which follow one another in time offset fashion at a time interval (Tr2r) within the respective sequence,
   wherein the sequences of the measurements with different fields of view (p) are interweaved in time with one another such that ramps of respective other sequences are arranged in gaps between the ramps of one sequence and wherein there is a change between the fields of view (p) according to a regular pattern,
   wherein the measurement has a modulation pattern for at least one of the fields of view (p), said modulation pattern having at least two different, regularly recurring time offsets (T12,1; T12,2) between the ramps (24, 28; 34, 38) of different sequences (22, 26; 32, 36) with the same ramp index (j), which counts the ramps in the respective sequence, within the respective sequence, wherein these time offsets (T12,1; T12,2) differ from the time interval (Tr2r) with which the ramps within a respective sequence follow one another,
   (b) a two-dimensional spectrum (X) is calculated from the baseband signals (b), separately for each of the sequences (22; 26; 32; 36; 40; 42; 44), by way of a two-dimensional Fourier transform, wherein there is a ramp-by-ramp transformation in the first dimension and a transformation over the ramp index (j) in the second dimension,
   (c) for the at least one of the fields of view (p), values for the relative speed (v) of a radar target (18) captured in the respective field of view, which values are periodic with a predetermined speed period, are determined on the basis of a position (k,l) of a peak in at least one two-dimensional spectrum (56) of the baseband signals (b) of the respective field of view,
   (d) for the at least one of the fields of view (p), at least one phase relationship between spectral values obtained respectively at the same position (k,l) in the separately calculated two-dimensional spectra (X) of the field of view (p) are checked for correspondence with expected phase relationships (a(v,m,p)) for a plurality of the determined periodic values of the relative speed (v) of the captured radar target (18), and
   (e) for the at least one of the fields of view (p), an estimated value for the relative speed (v) of the radar target (18) captured in the respective field of view is selected from the determined, periodic values of the relative speed (v) on the basis of the results .of the check.

2. Method according to Claim 1, in which, for at least one of the fields of view (p), the measurement has a modulation pattern comprising at least three of the sequences (40; 42; 44), for which the same antenna (15) is used for transmission purposes,
   wherein these sequences, among themselves in relation to a first of the sequences (40), have different time offsets (T12,m,p; T13,m,p) which are assigned to a respective further one of the sequences (42; 44)

3. Method according to Claim 1 or 2, in which, for at least one of the fields of view (p), the measurement is carried out with a plurality of antennas (12) used for transmission, wherein use is made of at least two different transmission switching states (m), which differ in the selection of the antennas (12) used for transmission purposes,

wherein these transmission switching states (m) are each assigned to at least two of the sequences (22; 26; 32; 36) which are nested within one another in time and, among themselves in relation to a first of the sequences (22; 32), have a time offset (T12,m,p) assigned to a respective further one of the sequences (26; 36),

wherein different time offsets (T12,1,p; T12,2,p) are assigned to the further sequences (26; 36) in these different transmission switching states (m), and

wherein switching between the relevant transmission switching states (m) is carried out between successive ramps (24; 28; 34; 38) of the measurement, which ramps are assigned to different transmission switching states (m).

4. Method according to any one of the preceding claims,

in which the respective measurement for at least two of the fields of view (p) is an angle-resolving measurement, which is carried out with different selections of a plurality of antennas (12, 15; 14) used for transmission and/or reception purposes,

wherein an angle position ($\theta$) of a radar target (18) located in a plurality of the fields of view (p) is determined on the basis of amplitudes and/or phases at the position (k,l) of a peak, corresponding to the radar target (18), in two-dimensional spectra (X) of the baseband signals (b) of the measurements of the plurality of fields of view (p), which are obtained for the different selections of the antennas (12, 15; 14) used for transmission and/or reception purposes.

5. Method according to any one of the preceding claims,

in which the respective measurement for at least two of the fields of view (p) is an angle-resolving measurement, which is carried out with different selections of a plurality of antennas (12, 15; 14) used for transmission and/or reception purposes,

wherein a search for peaks in two-dimensional spectra (56; 57) of the baseband signals (b) of the measurements of the respective fields of view (p) is performed to locate radar targets (18),

wherein an angle position ($\theta$) of a radar target (18) located in a respective field of view (p) is determined on the basis of amplitudes and/or phases at the position (k,l) of a peak, corresponding to the radar target (18), in two-dimensional spectra (X) of the baseband signals (b), which are obtained for the different selections of the antennas (12, 15; 14) used for transmission and/or reception purposes,

wherein,

in a case where a radar target (18) has been located in at least one of the fields of view (p), amplitudes and/or phases at the position (k,l), corresponding to the radar target (18), in two-dimensional spectra (X) in the baseband signals of the measurement of the other field of view (p) are additionally used to determine or correct the angle position ($\theta$) at a position (d,$\theta$), which, in account of its distance (d) and/or its angle position ($\theta$), is located in a region of overlap of the field of view (p) with another one of the fields of view (p), in which field of view the radar target (18) has not been located.

6. Method according to any one of the preceding claims, in which successive ramps (24; 28; 34; 38; 41; 43; 45) within a respective sequence (22; 26; 32; 36; 40; 42; 44) have one same ramp slope (F/T) and have one same difference in their ramp centre frequencies,

wherein said difference in the ramp centre frequencies is optionally unequal to zero, and

wherein ramps (24; 28; 34; 38; 41; 43; 45) which have the same ramp index (j) in the respective sequences (22; 26; 32; 36; 40; 42; 44) of the measurements have the same ramp slope (F/T) and the same ramp centre frequency.

7. Method according to any one of the preceding claims, in which the ramps (24; 28; 34; 38; 41; 43; 45) of the sequences of the measurements have the same frequency deviation (F).

8. Method according to any one of the preceding claims, in which, for the at least one of the fields of view (p) and separately for the respective field of view (p), the two-dimensional spectra (X) calculated separately for each of the sequences (22; 26; 32; 36; 40; 42; 44) are combined to form a two-dimensional spectrum (56) of the baseband signals (b), which is used in step (c) of determining values for the relative speed (v).

9. Method according to any one of the preceding claims, wherein, when checking the phase relationship, a relationship according to the equation

$$\Delta\varphi_{12} = 2\pi \frac{2}{c} f_0 T_{12} v$$

is used, which relates an expected phase difference $\Delta\varphi_{12}$ between a phase of the spectral value of the respective spectrum (X) of a further sequence (26) and a phase of the spectral value of the spectrum (X) of the first sequence (22) to the time offset T12 assigned to the further sequence (26) and the relative speed v, where c is the speed of light and $f_0$ is the mean transmission frequency.

10. Method according to any one of the preceding claims, wherein, when checking the phase relationship for a correspondence with expected phase relationships for the respective field of view (p), the square of an absolute value of a complex scalar product $a_{k,l}^H a(v)$ of a measurement vector $a_{k,l}$ with a control vector a(v), which depends on the value v of the relative speed, is calculated, where the components of the measurement vector $a_{k,l}$ are the spectral values of the spectra (X), calculated separately for the sequences, at the position (k,l) of the peak, where $a_{k,l}^H$ is the Hermitian adjoint vector to $a_{k,l}$ and where the control vector a(v) is a control vector of an ideal measurement for a radar target with a relative speed v, wherein the components of the control vector a(v), apart from a common normalization factor, are each the phase difference ($\Delta\varphi_{12}$) to the first sequence (22; 32; 40) that is expected for the time offset (T12) assigned to the respective sequence (26; 36; 42; 44), wherein the first component of the control vector a(v) equals 1 apart from the common normalization factor.

11. Method according to any one of the preceding claims, wherein, when checking the phase relationship for correspondence with expected phase relationships, a respective degree of correspondence S(v) is determined according to the relationship:

$$S(v) = \frac{1}{\sum_{(n,m)\in MN}\left|a_{k,l}^H(n,m)\right|^2} \sum_{(n,m)\in MN} \left|a_{k,l}^H(n,m)a(v,m)\right|^2$$

where MN are combinations of receiver channels n and transmission switching states m, which may differ in the selection of antennas (12) used for transmission purposes, $a_{k,l}$(n,m) is a measurement vector, the components of which are the spectra (X), respectively calculated separately for the baseband signals (b) of the individual sequences (22; 26; 32; 36) of the transmission switching state m and for the individual reception channels n, at the position (k,l) of the peak, $a_{k,l}^H(n,m)$ is the Hermitian adjoint vector to $a_{k,l}$(n,m), and a(v,m) is a control vector of the ideal measurement with the transmission switching state m for a radar target with a relative speed v.

12. FMCW Radar sensor with a control and evaluation unit (16), in which a method according to any one of Claims 1 to 11 is implemented.

## Revendications

1. Procédé de localisation d'une cible radar (18), dans lequel des mesures radar FMCW sont effectuées au moyen d'antennes d'émission (12 ; 15) présentant des champs de vision (p) différents, qui se distinguent par un angle d'ouverture et/ou par une portée, dans lequel les signaux reçus sont mélangés à des signaux en bande de base (b), dans lequel le procédé comprend les étapes suivantes :

(a) une mesure est respectivement effectuée au cours d'un cycle de mesure pour les différents champs de vision (p), lors de laquelle un signal d'émission (20) modulé en fréquence en forme de rampe est émis, dont le motif de modulation comprend plusieurs séquences (22 ; 26 ; 32 ; 36 ; 40 ; 42 ; 44), imbriquées dans le temps, de rampes (24 ; 28 ; 34 ; 38 ; 41 ; 43 ; 45) qui se succèdent à l'intérieur de la séquence respective avec un décalage temporel (Tr2r),
dans lequel les séquences des mesures présentant des champs de vision (p) différents sont entrelacées dans le temps les unes avec les autres de manière à ce que des rampes des autres séquences respectives soient disposées dans les intervalles entre les rampes d'une séquence et dans lequel une alternance est effectuée entre les champs de vision (p) selon un motif régulier,
dans lequel, pour au moins l'un des champs de vision (p), la mesure comporte un motif de modulation qui comporte au moins deux décalages temporels différents se répétant régulièrement (T12,1 ; T12,2) entre des rampes (24, 28 ; 34, 38) de séquences (22, 26 ; 32, 36) différentes ayant le même indice de rampe (j) à l'intérieur de la séquence respective, lequel indice de rampe (j) décompte les rampes dans la séquence respective, dans lequel lesdits décalages temporels (T12,1 ; T12,2) se distinguent de l'intervalle de temps (Tr2r) avec lequel les rampes se succèdent à l'intérieur d'une séquence respective,

(b) un spectre bidimensionnel (X) est calculé à partir des signaux en bande de base (b) séparément pour chacune des séquences (22 ; 26 ; 32 ; 36 ; 40 ; 42 ; 44) par une transformation de Fourier bidimensionnelle, dans lequel la transformation se fait rampe par rampe dans la première dimension et suivant l'indice de rampe (j) dans la deuxième dimension,

(c) pour ledit au moins un des champs de vision (p) sur la base d'une position (k,l) d'un pic dans au moins un spectre bidimensionnel (56) des signaux en bande de base (b) du champ de vision respectif, des valeurs de la vitesse relative (v) d'une cible radar (18) détectée dans le champ de vision respectif sont déterminées, lesquelles valeurs sont périodiques avec une période de vitesse prédéterminée,

(d) pour ledit au moins un des champs de vision (p), il est vérifié si au moins une relation de phase entre les valeurs spectrales respectivement obtenues à la même position (k,l), dans les spectres bidimensionnels (X) du champ de vision (p) calculés séparément, concorde avec des relations de phase attendues (a(v,m,p)) pour plusieurs des valeurs périodiques déterminées de la vitesse relative (v) de la cible radar (18) détectée, et

(e) pour ledit au moins un des champs de vision (p), une valeur estimée de la vitesse relative (v) de la cible radar (18) détectée dans le champ de vision respectif est sélectionnée sur la base du résultat de la vérification parmi les valeurs périodiques déterminées de la vitesse relative (v).

2. Procédé selon la revendication 1, dans lequel, pour au moins l'un des champs de vision (p), la mesure présente un motif de modulation qui comprend au moins trois des séquences (40 ; 42 ; 44) pour lesquelles la même antenne (15) est utilisée pour l'émission,

dans lequel ces séquences présentent des décalages temporels (T12,m,p ; T13,m,p) différents par rapport à une première des séquences (40), lesquels décalages temporels sont respectivement associés à une autre des séquences (42 ; 44).

3. Procédé selon la revendication 1 ou 2, dans lequel, pour au moins l'un des champs de vision (p), la mesure est effectuée au moyen de plusieurs antennes (12) utilisées pour l'émission, dans lequel on utilise au moins deux états de commutation d'émission (m) différents, qui se distinguent par la sélection des antennes (12) utilisées pour l'émission,

dans lequel au moins deux des séquences (22 ; 26 ; 32 ; 36), qui sont entrelacées dans le temps l'une avec l'autre et qui présentent un décalage temporel (T12,m,p) associé à une autre des séquences (26 ; 36) par rapport à une première des séquences (22 ; 32), sont respectivement associées à ces états de commutation d'émission (m),

dans lequel, dans ces différents états de commutation d'émission (m), des décalages temporels (T12,1,p ; T12,2,p) différents sont associés aux autres séquences (26 ; 36), et

dans lequel une commutation entre les rampes successives (24 ; 28 ; 34 ; 38) de la mesure, qui sont associées à des états de commutation d'émission (m) différents, est effectuée entre les états de commutation d'émission (m) respectifs.

4. Procédé selon l'une des revendications précédentes, dans lequel, pour au moins deux des champs de vision (p), la mesure respective est une mesure à résolution angulaire qui est effectuée avec différentes sélections de plusieurs antennes (12, 15 ; 14) utilisées pour l'émission et/ou la réception,

dans lequel une position angulaire (θ) d'une cible radar (18) située dans une pluralité de champs de vision (p) est déterminée sur la base d'amplitudes et/ou de phases à la position (k,l) d'un pic correspondant à la cible radar (18) dans des spectres bidimensionnels (X) des signaux en bande de base (b) des mesures de la pluralité de champs de vision (p), qui sont obtenues pour les différentes sélections des antennes (12, 15 ; 14) utilisées pour l'émission et/ou la réception.

5. Procédé selon l'une des revendications précédentes, dans lequel, pour au moins deux des champs de vision (p), la mesure respective est une mesure à résolution angulaire qui est effectuée avec différentes sélections d'une pluralité d'antennes (12, 15 ; 14) utilisées pour l'émission et/ou la réception,

dans lequel, pour la localisation de cibles radar (18), une recherche de pics est effectuée dans les spectres bidimensionnels (56 ; 57) des signaux en bande de base (b) des mesures des champs de vision (p) respectifs, dans lequel une position angulaire (θ) d'une cible radar (18) située dans un champ de vision (p) respectif est déterminée sur la base d'amplitudes et/ou de phases à la position (k,l) d'un pic correspondant à la cible radar (18) dans des spectres bidimensionnels (X) des signaux en bande de base (b), qui sont obtenus pour les différentes sélections d'antennes (12, 15 ; 14) utilisées pour l'émission et/ou la réception,

dans lequel, dans un cas où une cible radar (18) a été localisée dans au moins l'un des champs de vision (p) à une position (d, θ) qui, en raison de sa distance (d) et/ou de sa position angulaire (θ), se situe dans un champ de chevauchement du champ de vision (p) avec un autre des champs de vision (p), champ de vision dans lequel la cible radar (18) n'a pas été localisée, des amplitudes et/ou des phases à la position (k,l) correspondant à la cible radar (18) dans les spectres bidimensionnels (X) des signaux en bande de base de la mesure de l'autre champ de vision (p) sont en outre utilisées pour la détermination ou la correction de la position angulaire (θ).

6. Procédé selon l'une des revendications précédentes, dans lequel, à l'intérieur d'une séquence (22 ; 26 ; 32 ; 36 ; 40 ; 42 ; 44) respective, des rampes (24 ; 28 ; 34 ; 38 ; 41 ; 43 ; 45) successives présentent une pente de rampe (F/T) identique et présentent une différence identique entre leurs fréquences centrales de rampe, dans lequel ladite différence entre les fréquences centrales de rampe est facultativement non nulle, et dans lequel des rampes (24 ; 28 ; 34 ; 38 ; 41 ; 43 ; 45) ayant le même indice de rampe (j) dans les séquences (22 ; 26 ; 32 ; 36 ; 40 ; 42 ; 44) respectives des mesures présentent la même pente de rampe (F/T) et la même fréquence centrale de rampe.

7. Procédé selon l'une des revendications précédentes, dans lequel les rampes (24 ; 28 ; 34 ; 38 ; 41 ; 43 ; 45) des séquences de mesures présentent la même excursion de fréquence (F).

8. Procédé selon l'une des revendications précédentes, dans lequel, pour ledit au moins un des champs de vision (p), des spectres bidimensionnels (X) calculés séparément pour chacune des séquences (22 ; 26 ; 32 ; 36 ; 40 ; 42 ; 44) sont combinés séparément pour le champ de vison (p) respectif, en un spectre bidimensionnel (56) des signaux en bande de base (b), lequel est utilisé lors de l'étape (c) de détermination de valeurs de la vitesse relative (v).

9. Procédé selon l'une des revendications précédentes, dans lequel, lors de la vérification de la relation de phase, une relation conforme à l'équation

$$\Delta\varphi_{12} = 2\pi\frac{2}{c}f_0 T_{12} v$$

est utilisée, laquelle met en relation une différence de phase attendue $\Delta\varphi_{12}$ entre une phase de la valeur spectrale du spectre (X) respectif d'une autre séquence (26) et une phase de la valeur spectrale du spectre (X) de la première séquence (22), avec le décalage temporel T12 associé à l'autre séquence (26) et la vitesse relative v, où c est la vitesse de la lumière et $f_0$ est la fréquence d'émission moyenne.

10. Procédé selon l'une des revendications précédentes, dans lequel, pour le champ de vision (p) respectif, lorsqu'il est vérifié que la relation de phase concorde avec les relations de phase attendues, le carré d'une valeur absolue d'un produit scalaire complexe $a_{k,l}^H a(v)$ d'un vecteur de mesure $a_{k,l}$ est calculé avec un vecteur de commande a(v) dépendant de la valeur v de la vitesse relative, dans lequel les composantes du vecteur de mesure $a_{k,l}$ sont les valeurs spectrales des spectres (X) calculés séparément pour les séquences à la position (k,l) du pic, dans lequel $a_{k,l}^H$ est le vecteur adjoint hermitien de $a_{k,l}$, et dans lequel le vecteur de commande a (v) est un vecteur de commande d'une mesure idéale pour une cible radar présentant une vitesse relative v, dans lequel les composantes du vecteur de commande a(v), à un facteur de normalisation commun près, sont respectivement la différence de phase ($\Delta\varphi_{12}$) attendue par rapport à la première séquence (22 ; 32 ; 40) pour le décalage temporel (T12) associé à la séquence (26 ; 36 ; 42 ; 44) respective, dans lequel la première composante du vecteur de commande a(v) est égale à 1 au facteur de normalisation commun près.

11. Procédé selon l'une des revendications précédentes, dans lequel, lorsqu'il est vérifié que la relation de phase et les relations de phase attendues concordent, un degré de concordance S(v) respectif est déterminé conformément à la relation :

$$S(v) = \frac{1}{\sum_{(m,n)\in MN}\left|a_{k,l}^H(n,m)\right|^2} \sum_{(m,n)\in MN}\left|a_{k,l}^H(n,m)a(v,m)\right|^2$$

où MN sont des combinaisons de canaux de réception n et d'états d'émission m se distinguant éventuellement par la sélection d'antennes (12) utilisées pour l'émission, $a_{k,l}(n,m)$ est un vecteur de mesure dont les composantes sont les valeurs spectrales des signaux (b) des spectres (X), respectivement calculés séparément à la position (k,l) du pic, pour les signaux en bande de base (b) des différentes séquences (22 ; 26 ; 32 ; 36) de l'état de commutation d'émission m et pour les différents canaux de réception n, $a_{k,l}^H(n,m)$ est le vecteur adjoint hermitien de $a_{k,l}(n,m)$, et a(v,m) est un vecteur de commande de la mesure idéale avec l'état de commutation d'émission m pour une cible radar présentant une vitesse relative v.

**12.** Capteur radar FMCW comportant un dispositif de commande et d'évaluation (16) dans lequel un procédé selon l'une des revendications 1 à 11 est mis en œuvre.

Fig. 1

**Fig. 2**

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110122013 A1
- EP 0730166 A1
- US 5652589 A
- WO 2010115418 A2
- DE 102012008350 A1
- JP 2009288223 A
- US 20120235857 A1
- EP 2060929 A1